# EUROPEAN PATENT APPLICATION

(11) **EP 3 569 393 A1**
(43) Date of publication of application: **20.11.2019**
(21) Application number: 18173202.5
(22) Date of filing: 18.05.2018
(51) Int. Cl.: B29C 70/56, B29C 70/32

(54) **METHOD OF MANUFACTURING A COMPOSITE COMPONENT**

(71) Applicant: Syddansk Universitet, 5230 Odense M (DK)
(72) Inventor: Geiger, Raphael, 5220 Odense SØ (DK); Anderer, Marco, 76337 Waldbronn (DE)
(74) Representative: Plougmann Vingtoft a/s

(57) **Abstract**

The invention relates to a method of manufacturing a composite component comprising resin and reinforcing fibres (1) by use of a holding tool part (3) having at least one fibre holder (4) arranged at or near a circumference of the holding tool part for holding the fibres (1) during manufacturing. In some embodiments, each fibre holder is connected to a mass member (5), which is radially movably arranged in relation to the holding tool part. The fibres (1) are arranged in the holding tool part (3) in engagement with the at least one fibre holder (4) and in a mould cavity (7). The fibres are tensioned by rotating the holding tool part while the resin cures with a speed high enough to make the at least one mass member move outwards due to the rotational forces. In other embodiments, the fibres are tensioned by use of radially outwards movable tensioning members (10). It may be possible to apply vacuum to the resin as part of the process.

## Description

### FIELD OF THE INVENTION

The present invention relates to a method of manufacturing a composite component comprising continuous fibres, and in particular to such a method wherein a tensioning force is applied to the fibres during manufacturing.

### BACKGROUND OF THE INVENTION

Composite materials with continuous fibres in a polymer matrix are used for a very large number of applications. Within the structure of the component, the matrix material keeps the shape of the component while the fibres ensure the strength and stiffness of the component. Within composite manufacturing, it is a challenge to align the fibres in a way so that they suit the applied forces during use of the final component. Especially in moulded composite production processes, such as resin transfer moulding (RTM) or vacuum infusion, the fibre orientation can change unintentionally during the manufacturing. This results in a less optimal use of the fibres and thereby a component which has a lower strength and/or stiffness than if it had been possible to keep the fibres perfectly aligned in the desired orientation.

Another factor that also influences the final properties of a composite material is that the resin may comprise air bubbles which result in voids in the final component after the curing of the resin. Such voids are potential crack initiation points when the component is loaded.

Hence, an improved method of manufacturing a composite component comprising continuous fibres would be advantageous.

### OBJECT OF THE INVENTION

It is an object of the present invention to provide a method of manufacturing a composite component having continuous fibres with which it is possible to ensure that a desired fibre orientation is maintained during the manufacturing.

It is another object of the present invention to provide a method of manufacturing a composite component having continuous fibres with which a more perfect alignment of the fibres can be obtained than with known manufacturing methods.

It is another object of the present invention to provide a method of manufacturing a composite component having continuous fibres with which a tensioning force can be applied to the fibres in a more efficient way than with known manufacturing methods.

It is an object of some embodiments of the present invention to provide a method of manufacturing a composite component having continuous fibres with which the amount of voids in the resin can be lowered compared to known manufacturing methods.

It is a further object of the present invention to provide an alternative to the prior art.

In particular, it may be seen as an object of the present invention to provide a method of manufacturing a composite component having continuous fibres that solves the above mentioned problems of the prior art.

### SUMMARY OF THE INVENTION

Thus, the above-described object and several other objects are intended to be obtained in a first aspect of the invention by providing a method of manufacturing a composite component comprising reinforcing fibres, the method comprising the steps of:
- providing a holding tool part having at least one fibre holder arranged at or near a circumference of the holding tool part for holding the fibres during manufacturing, each fibre holder being connected to a mass member, the mass member being radially movably arranged in relation to the holding tool part at or near the circumference of the holding tool part,
- arranging the fibres in the holding tool part in engagement with the at least one fibre holder so that the fibres extend between one fibre holder and a fixing point on the holding tool and/or between two or more fibre holders, wherein
   - the fibres are pre-impregnated with resin before being arranged in the holding tool part, and/or
   - the fibres are dry while being arranged in the holding tool part, and either the holding tool part comprises a mould cavity or the method further comprises the step of arranging the holding tool part in an outer tool part to form a mould cavity containing the fibres; and the method comprising the step of injecting liquid resin into the mould cavity,
   su bsequently
- rotating the holding tool part and, if present, the outer tool part around the axis of rotation with a rotational speed high enough to make the at least one fibre holder with the at least one mass member move radially away from the axis of rotation, so that a tensional stress is thereby applied to the fibres due to the centrifugal forces acting on the at least one mass member, and
- at least partly curing or solidifying the resin while the holding tool part and, if present, the outer tool part is still being rotated.

Typically either pre-impregnated fibres or dry fibres would be used, but the "and/or" is used to specify that the invention also covers the possibility of using both dry and pre-impregnated fibres in combination.

The at least one mass member may e.g. be arranged further away from a central axis of rotation of the holding tool part than the at least one fibre holder is.

Each of the at least one mass member may also be incorporated into a fibre holder so that they form one unit. This may be established by letting the fibre holder be made from a material with so high a density that the fibre holder itself can also act as a mass member.

The holding tool part and the outer tool part may be designed so that a closed mould cavity is formed by these parts. They may also form an open mould part in which case a vacuum bag can be used to form an enclosure to which vacuum can be applied before injection of resin. These options also apply to embodiments wherein the holding tool part comprises the mould cavity.

The curing or solidification of the resin must be completed to such an extent that the fibres are kept in tension by the resin before the rotation is stopped. Further curing or solidification may take place after the rotation is stopped.

Another advantage of the method than the aligning and tensioning of the fibres is that the rotational forces can make air bubbles in the resin move towards the central section of the mould due to the difference in density of the air and the resin. In embodiments of the invention including application of vacuum - as will be explained below - such vacuum will assist in removal of the air bubbles so that a more void-free component can be obtained. Since trapped air causes voids in the final component, and since such voids are potential crack initiators, the mechanical properties of the final component can be improved by the invention.

The at least one fibre holder may be at least one pin or cylinder around which the fibres are wound. Alternatively or in combination therewith, the at least one fibre holder may be at least one clamp which is holding the fibres by a clamping force. In embodiments having the at least one the fibre holder in the form of clamps, each fibre holder may comprise opposed first and second clamp halves between which the fibres are arranged, and the fibre holder may be designed so that the radially outwards force from the connected mass member causes the first and second clamp halves to move towards each other and thereby apply an increasing clamping force to the fibres. Examples of fibre holders will be described in relation to the figures.

The rotation of the holding tool part may be obtained by an electric motor. It may alternatively be obtained by another engine, such as a combustion engine.

The holding tool part may be rotated with a speed of above 1000 rpm, such as above 2000 rpm, such as in the order of 3000 rpm. The actual speed to choose for a specific component will depend on a number of parameters including the dimensions and the materials used. It will typically be determined as part of the design process, such as by computer simulations and/or by experimentation.

In an alternative embodiment of the invention than the one described above, the invention relates to a method of manufacturing a composite component comprising reinforcing fibres, the method comprising the steps of:
- providing a holding tool part having at least one fibre holder arranged at or near a circumference of the holding tool part for holding the fibres during manufacturing, each fibre holder being connected to a threaded tensioning member, the at least one fibre holder being adapted to be radially outwards movable by screwing of the tensioning member,
- arranging the fibres in the holding tool part in engagement with the at least one fibre holder so that the fibres extend between one fibre holder and a fixing point on the holding tool part or between two or more fibre holders, wherein
   - the fibres are pre-impregnated with resin before being arranged in the holding tool part, and/or
   - the fibres are dry while being arranged in the holding tool part, and either the holding tool comprises a mould cavity or the method further comprises the step of arranging the holding tool part in an outer tool part to form a mould cavity containing the fibres; and the method comprising the step of injecting liquid resin into the mould cavity,
- screwing the at least one tensioning member to make the at least one fibre holder move radially away from the centre of the holding tool, so that a tensional stress is thereby applied to the fibres, and
   subsequently
- at least partly curing or solidifying the resin.

In the same manner as described for the embodiment involving rotation, the holding tool part and the outer tool part may be designed so that a closed mould cavity is formed by these parts. They may also form an open mould part in which case a vacuum bag can be used to form an enclosure to which vacuum is applied before injection of resin. These options also apply to embodiments wherein the holding tool part comprises the mould cavity.

In embodiments comprising injection of resin, the step of screwing the at least one tensioning member may be performed before, during or after the resin is injected.

In any of the embodiment as described above, i.e. both with and without rotation applied, the method may comprise that heat is applied to the holding tool part during at least a part of the manufacturing process in order to melt or cure the resin. For such methods involving heating, the whole system will typically be isolated and heated by a heating element from the outside. The temperature will be regulated by a control system receiving input from one or more sensors arranged to monitor the temperature. Such a heating element may be designed as part of the present invention, or it may be an oven or autoclave. For some kinds of materials, it may be advantageous to also be able to apply cooling before the component is removed from the tool.

For many polymers materials such heat will be necessary to activate the curing. However, some polymer materials cure without added heat, such as by addition of specific chemicals.

In some embodiments of the invention, vacuum may be applied to the composite component at least during a part of the manufacturing process. In the embodiments involving rotation, the vacuum may be applied via a rotational feedthrough so that it can also be applied to the rotating parts.

The holding tool part and thereby the composite component being manufactured may have a rotationally symmetric geometry. For such a geometry, the radial forces due to the rotation will act in the longitudinal orientation as the fibres whereby a most efficient use of the forces is obtained. However, it may also be an efficient way of manufacturing components with a not perfectly symmetrical geometry.

In some embodiments of the invention, a central section of the holding tool part may have a cross-shaped design. Such a cross-shaped design may further be circumscribed by an annular outer section. A cross-shaped design will e.g. be useful for drone bodies. For a drone, the airborne time is estimated by the ratio of its weight and its power. With increasing power, the weight increases which makes it crucial to minimize the structural weight. The manufacturing method according to the present invention increases the structural stiffness and strength of the component being made so that the weight of a drone structure can be reduced significantly whereby the airborne time can be increased correspondingly.

In any of the embodiments described above, the fibres may be made from a material having a high elasticity modulus, such as carbon fibres. Theoretically, the ratio of the compressive and the tensile modulus of a fibre is the relevant parameter for the enhancement by pre-tensioning. This ratio is often higher for fibres with a high modulus of elasticity. However, any kind of fibres and any kinds of matrix material are covered by the scope of the present invention even though "resin" is used to describe the matrix material.

In a second aspect, the present invention relates to a moulding system for use in a method of manufacturing a composite component comprising reinforcing fibres according to the first aspect of the invention, the moulding system comprising:
- a holding tool part having at least one fibre holder arranged at or near a circumference of the holding tool part for holding the fibres during manufacturing, each fibre holder being connected to a mass member, the mass member being radially movably arranged in relation to the holding tool part at or near the circumference of the holding tool part,
- either the holding tool part comprising a mould cavity or the moulding system further comprising an outer tool part in which the holding tool part can be arranged to form a mould cavity for containing the fibres,
- means for rotating the holding tool part around the axis of rotation with a rotational speed high enough to make the at least one fibre holder with its mass member move radially away from the axis of rotation.

Alternatively, the second aspect of the invention may relate to a moulding system for use in a method of manufacturing a composite component comprising reinforcing fibres according to the first aspect of the invention, the moulding system comprising:
- a holding tool part having at least one fibre holder arranged at or near a circumference of the holding tool part for holding the fibres during manufacturing, each fibre holder being connected to a threaded tensioning member, the at least one fibre holder being adapted to be radially outwards movable by screwing of the tensioning members, and
- either the holding tool part comprising a mould cavity or the moulding system further comprising an outer tool part in which the holding tool part can be arranged to form a mould cavity for containing the fibres.

In both kinds of these moulding systems, the mould cavity may comprise a resin inlet through which resin can be injected into the mould cavity.

The first and second aspect of the present invention may be combined. These and other aspects of the invention will be apparent from and elucidated with reference to the embodiments described hereinafter.

### BRIEF DESCRIPTION OF THE FIGURES

The method of manufacturing a composite component according to the invention will now be described in more detail with regard to the accompanying figures. The figures show one way of implementing the present invention and are not to be construed as being limiting to other possible embodiments falling within the scope of the attached claim set.
Figure 1 shows schematically the overall idea of applying tension to continuous fibres after they have been arranged in the holding tool part.
Figure 2 shows schematically an example of a holding tool part for use in a manufacturing method according to the present invention.
Figure 3 shows schematically and in a three-dimensional view a possible design of the holding tool part in figure 2.
Figure 4 shows schematically the holding tool part in figure 3. Figures 4.a shows a top view and figure 4.b shows a cross-sectional view along line A-A in figure 4.a. Figure 4.c shows the view in figure 4.a with the fibres arranged in the holding tool part.
Figure 5 shows schematically another embodiment of the fibre holders in the form of two clamp halves between which the fibres are held by clamping.
Figure 6 shows schematically the holding tool part arranged in an outer mould.
Figure 7 shows schematically an embodiment of the invention in which resin can be injected into a mould cavity containing the fibres.
Figure 8 shows schematically an embodiment of the invention wherein the fibre holders are adapted to be radially outwards movable by screwing of the tensioning members.
Figure 9 shows schematically a system with which vacuum can be applied to the composite component during the manufacturing.

### DETAILED DESCRIPTION OF AN EMBODIMENT

The overall idea of the present invention is to apply tension to the fibres during the manufacturing of composite components with continuous fibres. The tension is applied after the fibres have been arranged in a specially designed mould, and the tension is maintained during the curing or solidification of the resin. Such a tension will cause both a straightening and a pre-tensioning of the fibres resulting in improved mechanical properties of the final component as described above.

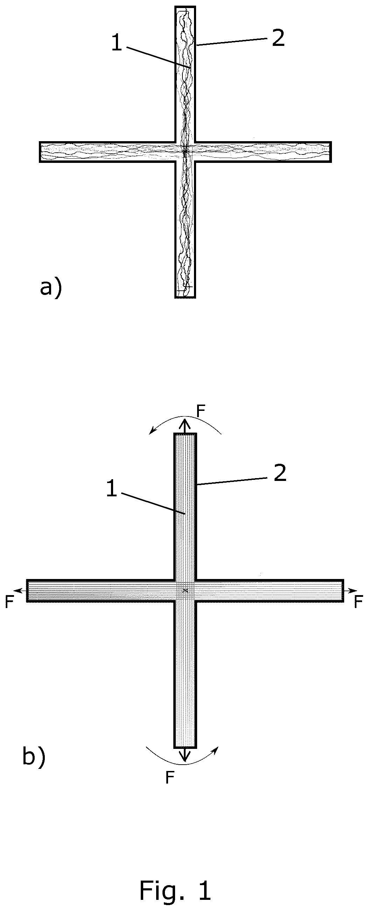

Figure 1 illustrates this overall idea when being used in a cross-shaped mould. Figure 1.a shows schematically how the fibres 1 may look after having been arranged in the mould 2, e.g. manually. It can be seen that even though the overall orientation of the fibres 1 is parallel to the sides of the mould 2, they are not fully straight. Figure 1.b shows schematically how the fibres 1 can be straightened by applying a radially extending force F to the fibres 1. Figure 1.b shows an embodiment in which rotation is applied as illustrated by the arrows. However, the principle of straightening and pre-tensioning of the fibres 1 by application of an outwards force F also applies to embodiments without rotation as described above.

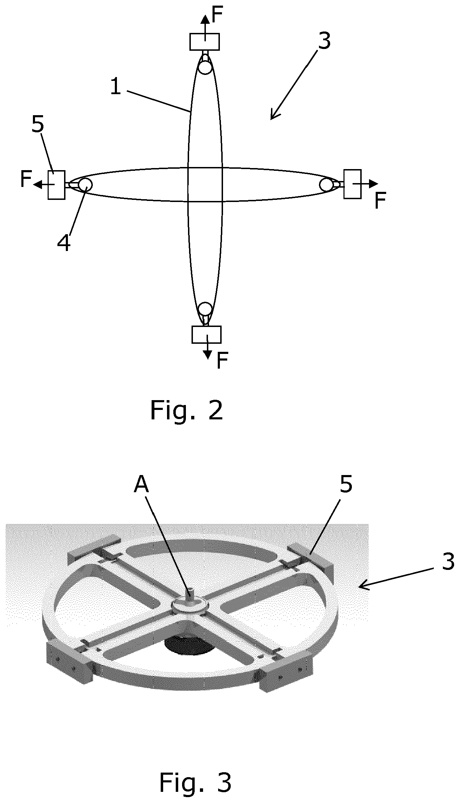

Figure 2 shows schematically an example of a holding tool part 3 for use in a manufacturing method according to the present invention. A preferred design used in the research resulting in the present invention is a component which has a cross-shaped design which is circumscribed by an annular outer section. Therefore, such a geometry will be shown in the figures as an example. However, the invention can also be used for other shapes of the components being manufactured. The holding tool part 3 of the illustrated embodiments has four fibre holders 4 arranged at the circumference of the holding tool part 3 for holding the fibres 1 during the manufacturing. Each of fibre holders 4 is connected to a mass member 5 which is designed to be radially movable in relation to the holding tool part 3 at or near the circumference of the holding tool part 3. In the illustrated embodiment, the mass members 5 are arranged further away from a central axis of rotation A of the holding tool part 3 than the fibre holders 4 are.

A possible design of the holding tool part 3 in figure 2 is shown in a three-dimensional view in figure 3; in this figure, the fibre holders are not visible, but the mass members 5 are seen. Possible designs of the fibre holders 4 will be described in further details below.

The fibres 1 can be either pre-impregnated with resin before being arranged in the holding tool part 3, or dry while being arranged in the holding tool part. It may also be possible to use both pre-impregnated fibres and dry fibres, if desired. When dry fibres are used, either the holding tool part comprises a mould cavity, or the method further comprises arranging the holding tool part in an outer tool part to form a closed mould cavity. In both cases, the mould cavity is possibly obtained in combination with a vacuum bag as described above, the mould cavity containing the fibres and into which mould cavity liquid resin is injected via a resin inlet. In the embodiments illustrated in the figures, the mould cavity is obtained by arranging the holding tool part in an outer tool part.

Theoretically, all types of fibre materials can be used in combination with thermoset resins like epoxy resins and polyurethanes as well as other matrix materials, including thermoplastic resins, that are liquid/viscous in the production process. The fibre alignment in the process is particularly advantageous for fibre materials with a high tensile modulus and fibres that do not align straight in traditionally used composite manufacturing processes, such as RTM. Theoretically, the ratio of the compressive and tensile modulus of a fibre is the relevant parameter for the enhancement by pre-tensioning. This ratio is often higher for fibres with a high modulus of elasticity such as high modulus carbon fibres.

When the material has been arranged, the holding tool part 3 is rotated around the axis of rotation A with a rotational speed high enough to make the at least one fibre holder 4 with the corresponding at least one mass member 5 move radially away from the axis of rotation A. Hereby a tensional stress will be applied to the fibres 1 due to the centrifugal forces acting on the at least one mass member 5. The method is controlled so that the holding tool part and, if present, the outer tool part is still being rotated while the resin cures or solidifies. This rotation of the holding tool part 3 is preferably obtained by an electric motor (not shown), but other types of drive engines may also be used. The rotational speed which is necessary to apply the tension to the fibres will depend on a number of parameters including the dimensions and shape of the component being manufactured as well as the material used. However, computer simulations performed during the research leading to the present invention have shown that it may be advantageous that the holding tool part is rotated with a speed of above 1000 rpm, such as above 2000 rpm, such as in the order of 3000 rpm. Computer simulations have shown that the maximum rotational speed is in the range of approx. 2000 rpm, but the theoretical optimum rotational speed depends strongly on the cross-section and the material of the component being manufactured. For small cross-sections, it can be in the range of a few hundred rpm while larger cross-sections with very strong fibres can require even more than the mentioned 3000 rpm.

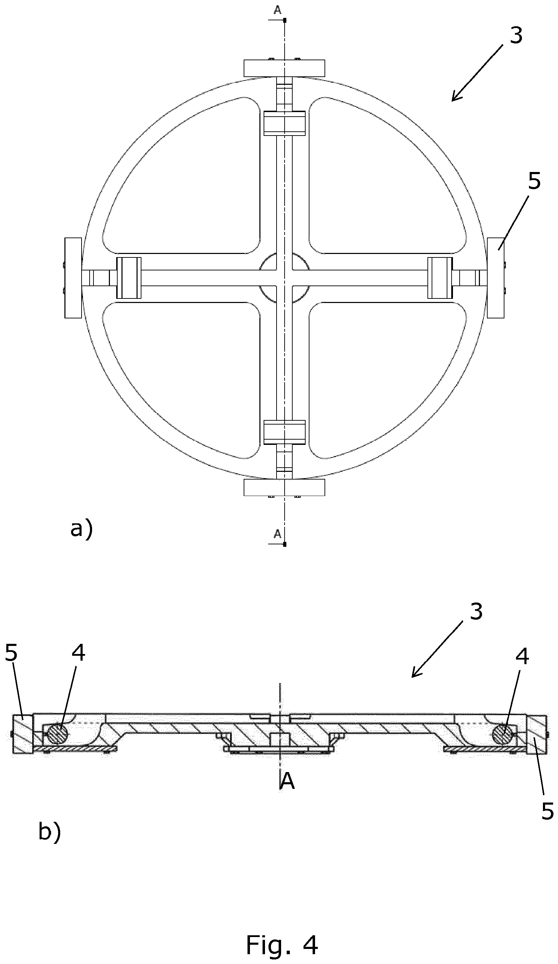

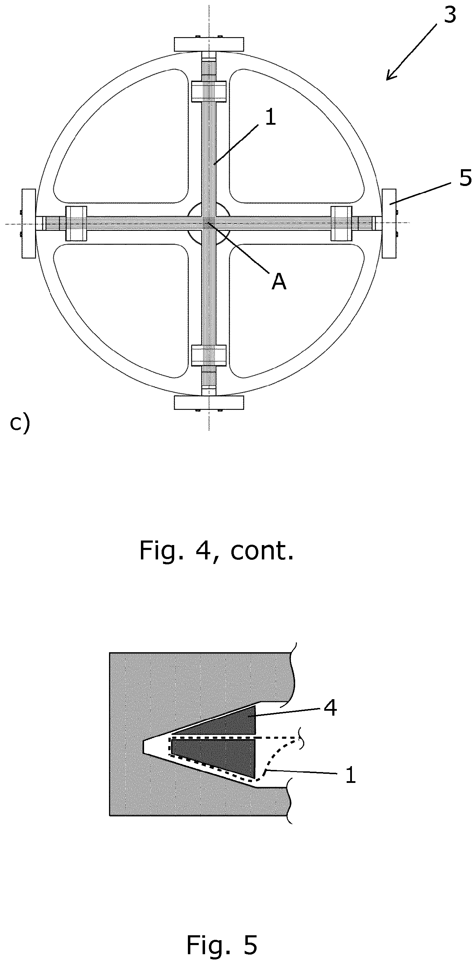

During the manufacturing, the fibres 1 are arranged in the holding tool part 3 in engagement with the fibre holders 4 so that the fibres 1 extend between one fibre holder 4 and a fixing point on the holding tool part 3 and/or between two or more fibre holders 4. Figure 4.a shows a top view of the holding tool part 3 in figure 3, and figure 4.b shows a cross-sectional view along line A-A. The fibre holders 4 shown schematically in this figure are pins or cylinders around which the fibres 1 can be wound. Figure 4.c shows the view in figure 4.a with the fibres 1 arranged in the holding tool part 3.

An alternative design of a fibre holder 4 is shown schematically in figure 5. Here the fibre holder 4 is a clamp which holds the fibres 1 by a clamping force. The fibre holder 4 in the embodiment in figure 5 comprises opposed first and second clamp halves between which the fibres 1 are arranged. The fibre holder 4 is designed so that the radially outwards force from the connected mass member (not shown in figure 5) causes the first and second clamp halves to move towards each other and thereby apply an increasing clamping force to the fibres 1.

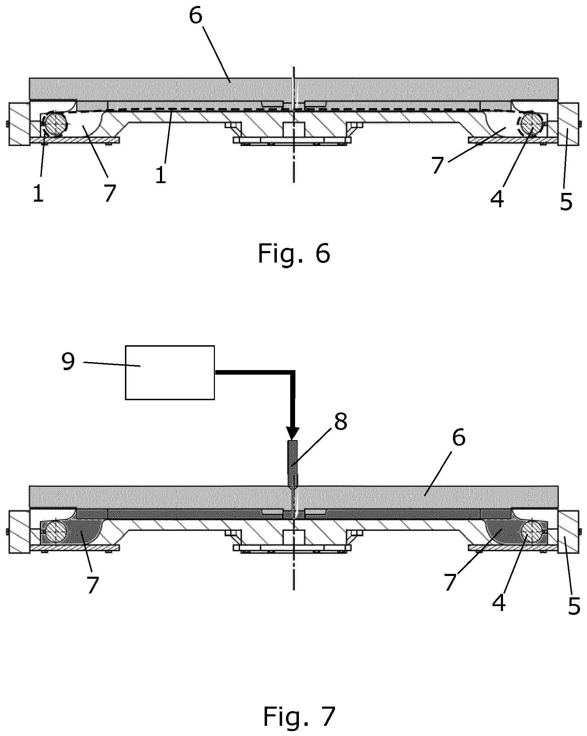

Figure 6 shows schematically the holding tool part 3 of the previous figures arranged in an outer mould 6 in order to form a closed mould cavity 7. Resin can then be injected into the mould cavity 7 containing the fibres as shown schematically in figure 7. Figure 7 shows schematically how a resin injection nozzle 8 is used for the supply of resin from a reservoir 9. The part of the system relating to the resin injection will be well known to a person skilled in the art. In figure 7, the fibres are not shown; this is to make the figure more clear. In the manufacturing method, the fibres will be arranged before the resin is injected.

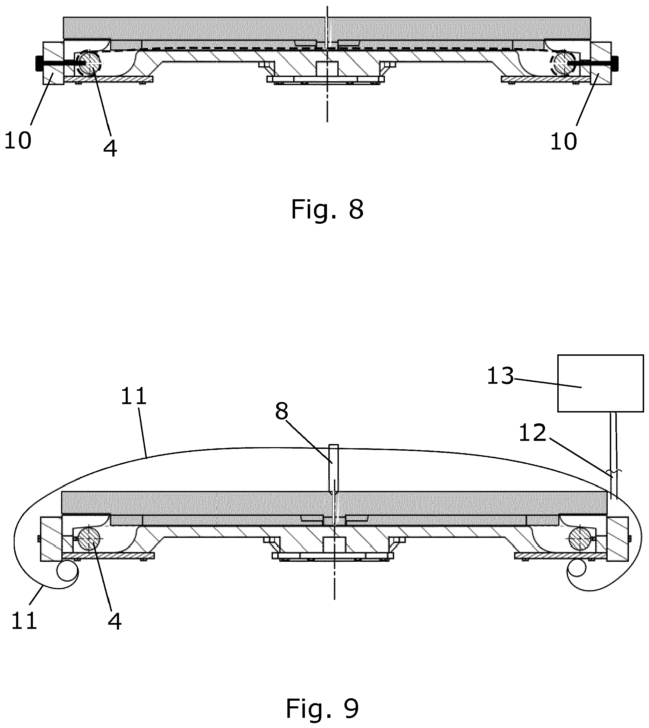

In an alternative method not involving rotation, the tension is applied to the fibres 1 by each fibre holder 4 being connected to a threaded tensioning member 10. The fibre holders 4 are adapted to be radially outwards movable by screwing of the tensioning members 10. An example of the functioning of such a tensioning member 10 is shown schematically in figure 8. When the fibres 1 are arranged around the fibre holders 4, the tensioning members 10 are screwed to make the fibre holders 4 move radially away from the centre of the holding tool part 3, so that a tensional stress is thereby applied to the fibres 3. Apart from this difference, this method resembles what has been described for the method involving rotation. For some applications, it will be sufficient to apply the tensioning once whereas for other applications it will be advantageous to re-tension during the manufacturing, e.g. due to changes in viscosity of the resin as a result of increasing temperature.

For some materials, it will be necessary or advantageous to apply heat to the holding tool part during at least a part of the manufacturing process in order to melt or cure the resin. This may e.g. be done by arranging the equipment holding the material in an oven. Alternatively, it may be obtained by using a holding tool and/or outer tool part to which heat can be applied in other ways, such as via build-in electrically controlled heating elements (not shown).

Figure 9 shows schematically a system for use in a method as described above with which system vacuum can be applied to the composite component at least during a part of the manufacturing process. As shown in Fig. 9 the mould is covered by a vacuum film 11. The air is removed by the vacuum valve 12 connected to a vacuum pump 13. The mould and the included composite material is kept airtight. The vacuum supports removing potential air from the matrix material. The vacuum also applies a pressure to the mould and therefore the included composite material to achieve a high fibre volume content of the final composite material.

When performing a method according to the invention, a control system is used to control the manufacturing. Some of the parameters to control are the timing of the application of heat, possible resin injection and the start of the rotation to ensure that the viscosity of the resin is so that the desired properties are obtained. The viscosity should be high enough to allow the fibres to re-arrange and align by stretching and still low enough to ensure that it stays in place and does not move towards the circumference of a rotation mould. As should be clear from the above description, not all parameters are relevant for all embodiments of the invention.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Furthermore, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Method of manufacturing a composite component comprising reinforcing fibres (1), the method comprising the steps of:
- providing a holding tool part (3) having at least one fibre holder (4) arranged at or near a circumference of the holding tool part (3) for holding the fibres (1) during manufacturing, each fibre holder (4) being connected to a mass member (5), the mass member (5) being radially movably arranged in relation to the holding tool part (3) at or near the circumference of the holding tool part (3),
- arranging the fibres (1) in the holding tool part (3) in engagement with the at least one fibre holder (4) so that the fibres (1) extend between one fibre holder (4) and a fixing point on the holding tool part (3) and/or between two or more fibre holders (4), wherein
- the fibres (1) are pre-impregnated with resin before being arranged in the holding tool part (3), and/or
- the fibres (1) are dry while being arranged in the holding tool part (3), and either the holding tool part (3) comprises a mould cavity (7) or the method further comprises the step of arranging the holding tool part (3) in an outer tool part (6) to form a mould cavity (7) containing the fibres (1); and the method comprising the step of injecting liquid resin into the mould cavity (7),
subsequently
- rotating the holding tool part (3) and, if present, the outer tool part (6) around the axis of rotation (A) with a rotational speed high enough to make the at least one fibre holder (4) with the at least one mass member (5) move radially away from the axis of rotation (A), so that a tensional stress is thereby applied to the fibres (1) due to the centrifugal forces acting on the at least one mass member (5), and
- at least partly curing or solidifying the resin while the holding tool part (3) and, if present, the outer tool part (6) is still being rotated.

2. Method according to claim 1, wherein the at least one fibre holder (4) is at least one pin or cylinder around which the fibres (1) are wound.

3. Method according to claim 1, wherein the at least one fibre holder (4) is at least one clamp which is holding the fibres (1) by a clamping force.

4. Method according to claim 3, wherein each fibre holder (4) comprises opposed first and second clamp halves between which the fibres (1) are arranged, and wherein the fibre holder (4) is designed so that the radially outwards force from the connected mass member (5) causes the first and second clamp halves to move towards each other and thereby apply an increasing clamping force to the fibres (1).

5. Method according to any of the preceding claims, wherein the rotation of the holding tool part (3) is obtained by an electric motor.

6. Method according to any of the preceding claims, wherein the holding tool part (3) is rotated with a speed of above 1000 rpm, such as above 2000 rpm, such as in the order of 3000 rpm.

7. Method of manufacturing a composite component comprising reinforcing fibres (1), the method comprising the steps of:
- providing a holding tool part (3) having at least one fibre holder (4) arranged at or near a circumference of the holding tool part (3) for holding the fibres (1) during manufacturing, each fibre holder (4) being connected to a threaded tensioning member (10), the at least one fibre holder (4) being adapted to be radially outwards movable by screwing of the tensioning member (10),
- arranging the fibres (1) in the holding tool part (3) in engagement with the at least one fibre holder (4) so that the fibres (1) extend between one fibre holder (4) and a fixing point on the holding tool part (3) or between two or more fibre holders (4), wherein
- the fibres (1) are pre-impregnated with resin before being arranged in the holding tool part (3), and/or
- the fibres (1) are dry while being arranged in the holding tool part (3), and either the holding tool part (3) comprises a mould cavity (7) or the method further comprises the step of arranging the holding tool part (3) in an outer tool part (6) to form a mould cavity (7) containing the fibres (1); and the method comprising the step of injecting liquid resin into the mould cavity (7),
- screwing the at least one tensioning member (10) to make the at least one fibre holder (4) moves radially away from the centre of the holding tool part (3), so that a tensional stress is thereby applied to the fibres (1), and
subsequently
- at least partly curing or solidifying the resin.

8. Method according to any of the preceding claims, wherein heat is applied to the holding tool part (3) during at least a part of the manufacturing process in order to melt or cure the resin.

9. Method according to any of the preceding claims, wherein vacuum is applied to the composite component at least during a part of the manufacturing process.

10. Method according to any of the preceding claims, wherein the holding tool part (3) and thereby the composite component being manufactured has a rotationally symmetric geometry.

11. Method according to any of the preceding claims, wherein a central section of the holding tool part (3) has a cross-shaped design.

12. Method according to any of the preceding claims, wherein the fibres (1) are made from a material having a high elasticity modulus, such as carbon fibres.

13. Moulding system for use in a method of manufacturing a composite component comprising reinforcing fibres (1) according to any of claims 1-6 or any of claims 8-12 when dependent on claim 1, the moulding system comprising:
- a holding tool part (3) having at least one fibre holder (4) arranged at or near a circumference of the holding tool part (3) for holding the fibres (1) during manufacturing, each fibre holder (4) being connected to a mass member (5), the mass member (5) being radially movably arranged in relation to the holding tool part (3) at or near the circumference of the holding tool part (3),
- either the holding tool part comprising a mould cavity or the moulding system further comprising an outer tool part (6) in which the holding tool part (3) can be arranged to form a mould cavity (7) for containing the fibres (1),
- means for rotating the holding tool part around the axis of rotation (A) with a rotational speed high enough to make the at least one fibre holder (4) with its mass member (5) move radially away from the axis of rotation (A).

14. Moulding system for use in a method of manufacturing a composite component comprising reinforcing fibres (1) according to claim 7 or any of claims 8-12 when dependent on claim 7, the moulding system comprising:
- a holding tool part (3) having at least one fibre holder (4) arranged at or near a circumference of the holding tool part (3) for holding the fibres (1) during manufacturing, each fibre holder (4) being connected to a threaded tensioning member (10), the at least one fibre holder (4) being adapted to be radially outwards movable by screwing of the at least one tensioning member (10), and
- either the holding tool part comprising a mould cavity or the moulding system further comprising an outer tool part (6) in which the holding tool part (3) can be arranged to form a mould cavity (7) for containing the fibres (1).

15. Moulding system according to claim 13 or 14, wherein the mould cavity (7) comprises a resin inlet through which resin can be injected into the mould cavity.

## Amended claims

### Amended claims in accordance with Rule 137(2) EPC.

1. Method of manufacturing a composite component comprising reinforcing fibres (1), the method comprising the steps of:
- providing a holding tool part (3) having at least one fibre holder (4) arranged at or near a circumference of the holding tool part (3) for holding the fibres (1) during manufacturing, each fibre holder (4) being connected to a mass member (5), the mass member (5) being radially movably arranged in relation to the holding tool part (3) at or near the circumference of the holding tool part (3),
- arranging the fibres (1) in the holding tool part (3) in engagement with the at least one fibre holder (4) so that the fibres (1) extend between one fibre holder (4) and a fixing point on the holding tool part (3) and/or between two or more fibre holders (4), wherein
- the fibres (1) are pre-impregnated with resin before being arranged in the holding tool part (3), and/or
- the fibres (1) are dry while being arranged in the holding tool part (3), and either the holding tool part (3) comprises a mould cavity (7) or the method further comprises the step of arranging the holding tool part (3) in an outer tool part (6) to form a mould cavity (7) containing the fibres (1); and the method comprising the step of injecting liquid resin into the mould cavity (7),
subsequently
- rotating the holding tool part (3) and, if present, the outer tool part (6) around the axis of rotation (A) with a rotational speed high enough to make the at least one fibre holder (4) with the at least one mass member (5) move radially away from the axis of rotation (A), so that a tensional stress is thereby applied to the fibres (1) due to the centrifugal forces acting on the at least one mass member (5), and
- at least partly curing or solidifying the resin while the holding tool part (3) and, if present, the outer tool part (6) is still being rotated.

2. Method according to claim 1, wherein the at least one fibre holder (4) is at least one pin or cylinder around which the fibres (1) are wound.

3. Method according to claim 1, wherein the at least one fibre holder (4) is at least one clamp which is holding the fibres (1) by a clamping force.

4. Method according to claim 3, wherein each fibre holder (4) comprises opposed first and second clamp halves between which the fibres (1) are arranged, and wherein the fibre holder (4) is designed so that the radially outwards force from the connected mass member (5) causes the first and second clamp halves to move towards each other and thereby apply an increasing clamping force to the fibres (1).

5. Method according to any of the preceding claims, wherein the rotation of the holding tool part (3) is obtained by an electric motor.

6. Method according to any of the preceding claims, wherein the holding tool part (3) is rotated with a speed of above 1000 rpm, such as above 2000 rpm, such as in the order of 3000 rpm.
